# EUROPEAN PATENT SPECIFICATION

(11) **EP 1 850 322 B1**
(45) Date of publication and mention of the grant of the patent: **03.11.2010**
(21) Application number: 06020506.9
(22) Date of filing: 29.09.2006
(51) Int. Cl.: G10L 11/00, G10L 17/00

(54) **Systems and methods for analyzing video content**
Systeme und Verfahren zur Analyse von Videoinhalt
Systèmes et procédés d'analyse de contenu vidéo

(30) Priority: 25.04.2006 US 410821
(43) Date of publication of application: 31.10.2007
(73) Proprietor: CyberLink Corp., Shindian City, Taipei (TW)
(72) Inventor: Chen, Ming-Jun, Tai-Nan City (TW); Chen, Jiun-Fu, Changhua County 5078 (TW); Tang, Shih-Min, Jiali Township Tainan County 722 (TW); Huang, Ho-Chao, Shindian City Taipei 231 (TW)
(74) Representative: Rehberg Hüppe + Partner

(56) References cited:
- EP-A- 1 531 457
- MESSER K ET AL: "Automatic sports classification" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 2, 11 August 2002 (2002-08-11), pages 1005-1008, XP010614050 ISBN: 0-7695-1695-X

## Description

### TECHNICAL FIELD

The present disclosure is generally related to video signal processing and, more particularly, is related to systems, methods, and computer readable media having programs for analyzing the content of video.

### BACKGROUND

In recent years, among the various kinds of multimedia, video is becoming an important component. Video refers to moving images together with sound and can be transmitted, received, and stored in a variety of techniques and formats. Video can include many different genres including, but not limited to episodic programming, movies, music, and sports, among others. End users, editors, viewers, and subscribers may wish to view only selected types of content within each genre. For example, a sports viewer may have great interest in identifying specific types of sporting events within a video stream or clip. Previous methods for classifying sports video have required the analysis of video segments and corresponding motion information. These methods, however, require significant processing resources that may be costly and cumbersome to employ.

A system and a method for analyzing video are known from MESSER K ET AL "Automatic sports classification" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA, IEEE COMPUT. SOC, US, vol. 2, 11 August 2002 (2002-08-11), pages 1005-1008, XP010614050 ISBN: 0-7695-1695-X. The system and method are configured to analyze sports video to automatically classify unknown sports video into the type of sport being played. The analysis is based on cue-detectors including referee whistles.

A system and a method for segmentation of audio data into meta patterns are known from EP 1 531 457 A1. The system and method serve to classify sports video due to its content.

### SUMMARY

Embodiments of the present disclosure provide a system, method and computer readable medium having a program for analyzing video content. In one embodiment a system includes: logic configured to collect sample whistle sounds corresponding to a plurality of sport types; logic configured to determine a plurality of sample whistle features; logic configured to generate a plurality of whistle sound patterns; logic configured to extract a plurality of audio features corresponding to a plurality of frames in a video; logic configured to compare the plurality of sample whistle features with the plurality of audio features to determine a plurality of whistle sounds in the video; logic configured to determine a sport type using a type of whistle indicator; logic configured to determine a sport type using a quantity of whistle occurrences data value; and logic configured to determine a sport type using a time of whistle occurrences data set.

A system according to the invention is defined in claim 1.

In another embodiment, a method includes: detecting a plurality of whistle sounds in an audio stream of a video; and determining a video content based on a plurality of properties corresponding to the plurality of whistle sounds.

A method according to the invention is defined in claim 3.

In a further embodiment, a computer readable medium having a computer program for analyzing video includes: logic configured to generate a plurality of whistle sound patterns; logic configured to detect a whistle sound in a video; and logic configured to analyze the video using the whistle sound.

A computer readable medium according to the invention is defined in claim 9.

Other systems and methods will be or become apparent to one with skill in the art upon examination of the following drawings and detailed description.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a block diagram illustrating an embodiment of building whistle patterns for use in analyzing video.
FIG. 2 is a block diagram illustrating an embodiment that uses the patterns of FIG. 1 to analyze video.
FIG. 3 is a table illustrating exemplary embodiments of sports types as related to whistle sounds.
FIGs. 4A-4C are diagrams illustrating audio sample strings with whistle sounds corresponding to different sports types.
FIGs. 5A and 5B are diagrams illustrating audio strings with whistle sounds corresponding to entire events of two different sports types.
FIG. 6 is a block diagram illustrating an embodiment of a system for analyzing video.
FIG. 7 is a block diagram illustrating an embodiment of a method for analyzing video.
FIG. 8 is a block diagram illustrating an embodiment of a computer readable medium having a program for analyzing video.

### DETAILED DESCRIPTION

Having summarized various aspects of the present disclosure, reference will now be made in detail to the description of the disclosure as illustrated in the drawings. While the disclosure will be described in connection with these drawings, there is no intent to limit it to the embodiment or embodiments disclosed herein. On the contrary, the intent is to cover all alternatives, modifications and equivalents included within the scope of the disclosure as defined by the appended claims.

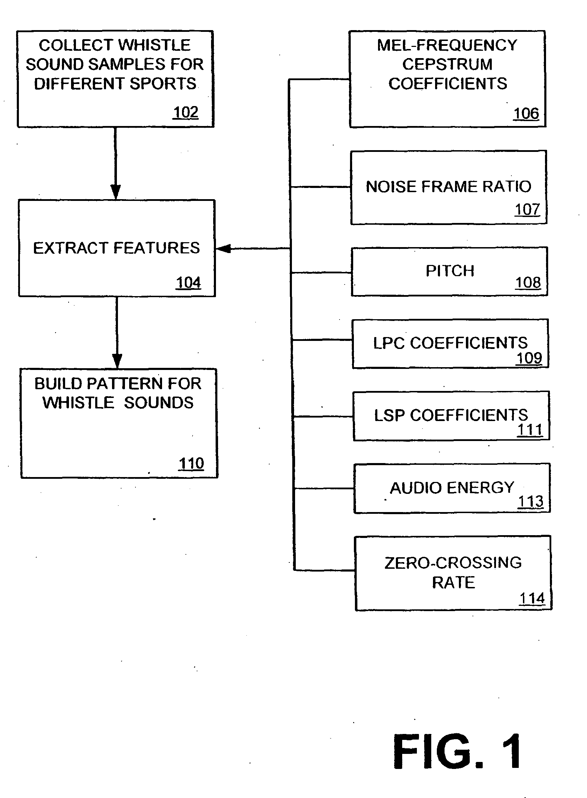

Beginning with FIG. 1, illustrated is a block diagram of an embodiment for building whistle patterns for analyzing video. The patterns can include patterns of one or more data features for whistle sounds. The patterns can be compared to the data features of video clips to determine the whistle sounds present in the video. In building the patterns, whistle sound samples are collected for different sports in block 102. The whistle sound samples can be collected for any number of sports including, but not limited to, football, soccer, basketball, lacrosse, hockey, and field hockey, among others. Examples of how whistles are used within these types of sports can include, for example, starting and stopping plays, signaling the start and end of periods of play, fouls, penalties, and time-outs, among others.

In block 104, features of sample whistle sounds are extracted from an audio sample in a frame-by-frame manner. Features can include, but are not limited to, mel-frequency cepstrum coefficients 106, noise frame ratio 107, and pitch 108. For example, other features that can be used include LPC coefficients 109, LSP coefficients 111, audio energy 113, and zero-crossing rate 114. The mel-frequency cepstrum coefficients are derived from the known variation of critical band-widths of the human ear. Filters are spaced linearly at low frequencies and logarithmically at high frequencies and a compact representation of an audio feature can be produced using coefficients corresponding to each of the band-widths. After the features are extracted in block 104, a whistle sound pattern is built for whistles corresponding to each of the different sports 110. The pattern can include the specific mel-frequency cepstrum coefficients 106 and pitch 108 that are statistically exclusive to the whistles used in different sport types.

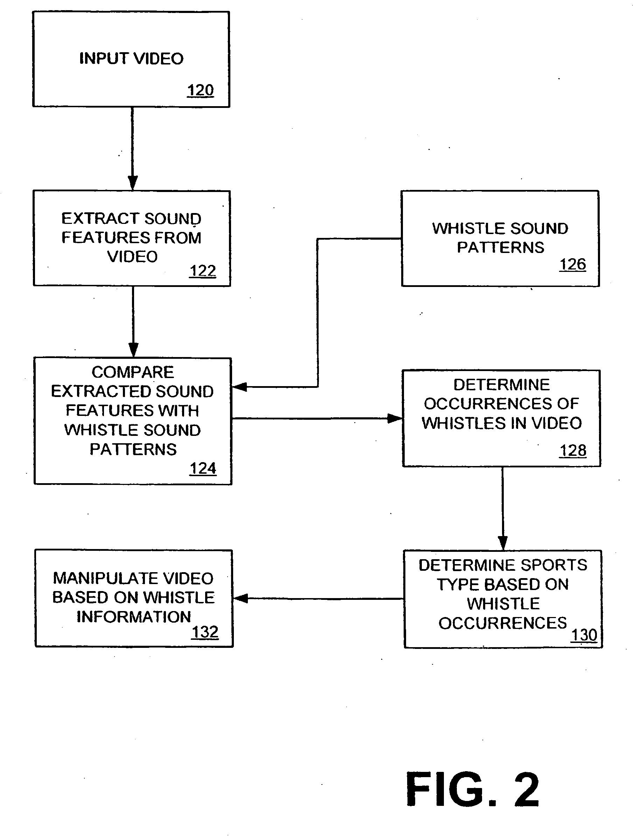

Reference is now made to FIG. 2, which is a functional block diagram illustrating use of the patterns of FIG. 1 to analyze video. A video is input in block 120 and the sound features are extracted from the video clip in block 122. The video clip can be a digital or analog streaming video signal or a video stored on a variety of storage media types. For example, the video can be stored in solid state hardware or on magnetic or optical storage media using analog or digital technology. The extracted sound features are compared to whistle sound patterns 126, in block 124. The occurrences of whistles in the video are determined in block 128.

A sports type is determined in block 130 based on whistle occurrences. For example, by analyzing whistle occurrence characteristics, it can be determined that the video is, for example, a soccer match by using the quantity of whistles and the time between each of the whistles or groups of whistles. Further, optionally, the video clips can be manipulated based on the whistle information in block 132. For example, in a football game the time between plays can be edited out of a video by retaining the portion of the video segment that occurs starting a few seconds before a whistle sound that is determined to be a play ending whistle. Similar periods of non-play can be edited out by identifying the halftime based on the lack of whistle sounds.

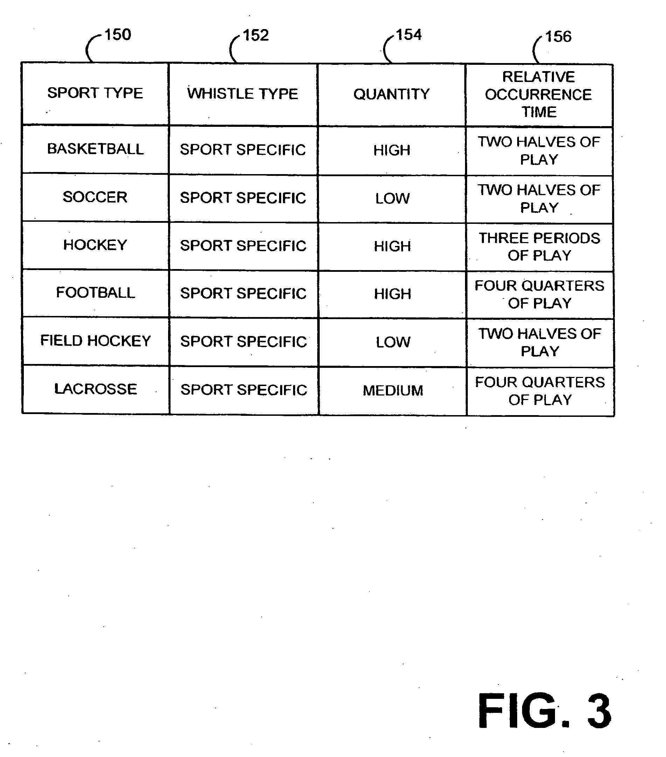

Reference is now made to FIG. 3, which is a table illustrating exemplary embodiments of sports types as related to whistle sounds. The table includes a column for sports type 150, which features an example of a variety of different sports that can be classified under the methods and systems herein. The table also includes a whistle type column 152 that can list the sport specific attributes of a whistle sounds corresponding to the sports type of column 150. For example, whistle type can include characteristics describing the tonal frequency or pitch of whistles used in a particular sport. The whistle type can also include characteristics describing the average duration of a whistle sound as it is used in a particular sport. The table also includes a quantity column 154, which includes a quantity of whistle sounds that are likely to occur in a particular type listed in column 150.

Similarly, a table also includes a relative occurrence time column 156 that describes a distribution of the whistle sounds in a typical event listed in column 150. One example of a relative occurrence time that can be specific to each sport is the beginning and ending of a period of play. The entries in the relative occurrence time describe, for example, the structure of play corresponding to the sports types in column 150. By analyzing the relative occurrence time of the whistles, the number and duration of play periods can be determined. The structure of play can be used to determine the sports type.

Another example of a relative occurrence time that can be specific to a particular sport can be length of an individual play, in, for example, a football game. A whistle is sounded, for example, at the end of a play in a football game. The next end of play whistle is likely to occur within a few seconds, in the case of a rushed down and a short play, or a greater number of seconds in the circumstance where a team uses the entire play clock before executing the next play.

By way of example, the quantity and relative occurrence time of whistle sounds may be used to determine the sports type in the absence of a distinctive whistle type 152. In the case where the whistle occurs a high quantity 154 of times throughout the event and in two periods of play 156, the event may be classified based on the quantity and/or relative occurrence times of the whistle (e.g. classified as a basketball game).

Alternatively, where the whistle occurs a high quantity 154 of times throughout the event and in four periods of play 156, the event may be classified based on the quantity and/or relative occurrence times or rhythms of the whistle (e.g. classified as a football game). Many sport types 150 may include the same or indistinguishable whistle types 152 and only be distinguishable by quantity 154 and relative occurrence time 156.

Additionally, while the quantity, for example, is depicted as being described in terms of categories such as high, medium, and low, the quantity can also be evaluated and determined in numerical terms. Such terms can be determined based on statistical or numeric techniques and can include values such as median, mean, and standard deviation, among others. All applicable statistical or numerical techniques are contemplated within the scope of this disclosure.

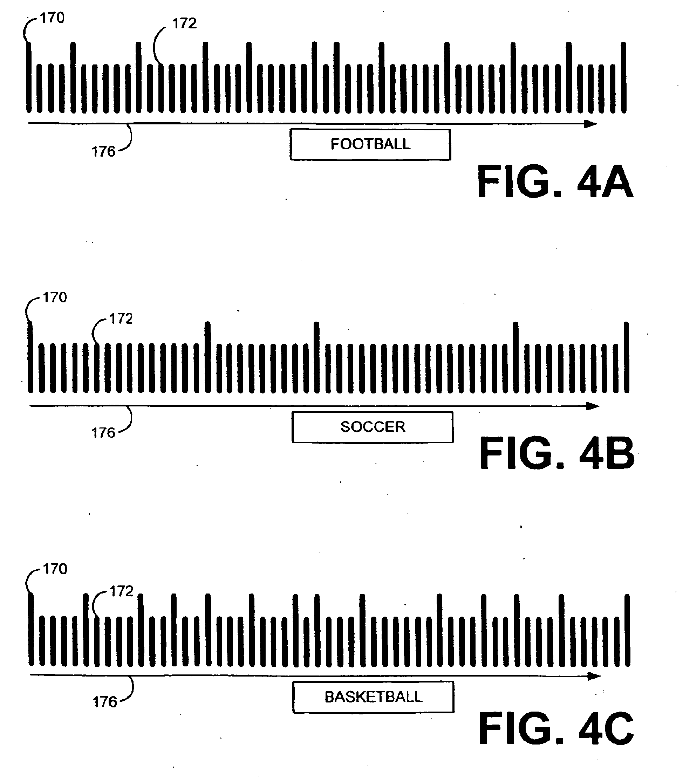

Reference is now made to FIGs. 4A-4C, which are diagrams illustrating audio component sample strings with whistle sounds corresponding to different sports types. Reference is first made to FIG. 4A, which is an audio component sample string corresponding to a football game. Each of the bars represents an audio sample that occurs along a timeline 176. The relevance of the bars to the analysis of the video is illustrated by the different heights of the bars. For example, a tall bar represents a whistle sound occurrence 170 and a short bar represents other audio 172. The high quantity of whistles 170 that occur in a substantially regular distribution throughout the time of the event can occur in a football or a basketball game, for example. Where the relative occurrence times of the whistles indicate that the game includes four periods or quarters of play, the video can be determined using the relative occurrence times of the whistle (e.g. determined to be a football game). Alternatively, where the relative occurrence times of the whistles indicate that the game includes two periods or halves of play, the video can be determined using the relative occurrence times of the whistle (e.g. determined to be a basketball game) as in FIG. 4C.

Similarly, the audio sample string of FIG. 4B can be identified as a soccer match where a whistle 170 is contained in the video in a low quantity and the relative occurrence times indicate that there are two halves of play with a total duration consistent with a soccer match. FIG. 4C can be identified as a basketball game based on the high quantity of whistles and the relative occurrence times. In contrast with football, basketball can include many plays and possession changes without the occurrence of a whistle. This difference renders the relative occurrence times of whistle sounds in football games distinguishable from those of basketball games.

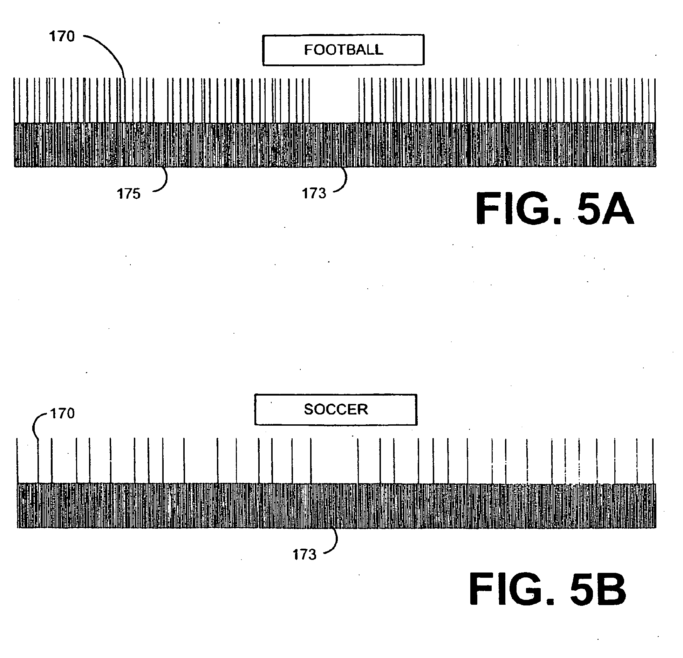

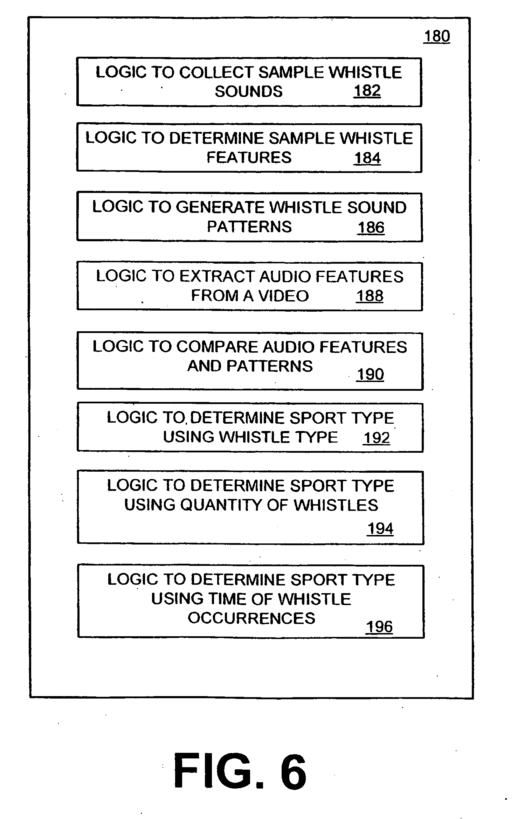

Reference is made to FIGs. 5A and 5B, which are diagrams illustrating audio strings with whistle sounds corresponding to entire events of two different sports types. Reference is first made to FIG. 5A, which is an audio string corresponding to an entire football game. Each of the bars represents an audio sample that occurs during the game. The tall bars represent whistle sound occurrences 170 and the short bars represent other audio. A football game can be, for example, characterized by a high quantity of whistles 170 that occur in a substantially regular distribution coupled with the breaks in play that occur during the quarter change 175 and the halftime 173. Similarly, referring to FIG. 5B, fewer whistle occurrences 170 and a game having only a single break in play at a halftime 173 allow the sports type to be determined using the quantity and relative occurrence times of the whistle sounds (e.g. as a soccer match). Reference is now made to FIG. 6, which is a block diagram illustrating an embodiment of a system for analyzing video. The system 180 includes logic to collect sample whistle sounds in block 182. The system 180 further includes logic to determine sample whistle features, including, for example pitch and mel-frequency cepstrum coefficients. The mel-frequency cepstrum coefficients provide a compact representation of an audio feature that can be produced using coefficients corresponding to a specific series of band-widths. The system 180 further includes logic to generate whistle sound patterns in block 186. In this manner, the whistle sound patterns can be used to extract audio features from a video in block 188. A video can be a digital or analog streaming video signal or a video stored on a variety of storage media types.

The system 180 further includes logic to compare audio features and the whistle sound patterns in block 190. The mel-frequency cepstrum coefficients and pitch data from the patterns is compared to the extracted mel-frequency cepstrum coefficient and pitch data from the audio stream. Similarly, the system 180 includes logic to determine a sports type using whistle type information in block 192. The whistle type information can include, for example, tonal pitch or frequency and duration, among others. Additionally or alternatively, the sports type can be determined using the quantity of whistles in a video in block 194. Also, the sports type can be determined using the time of the whistle occurrences in block 196.

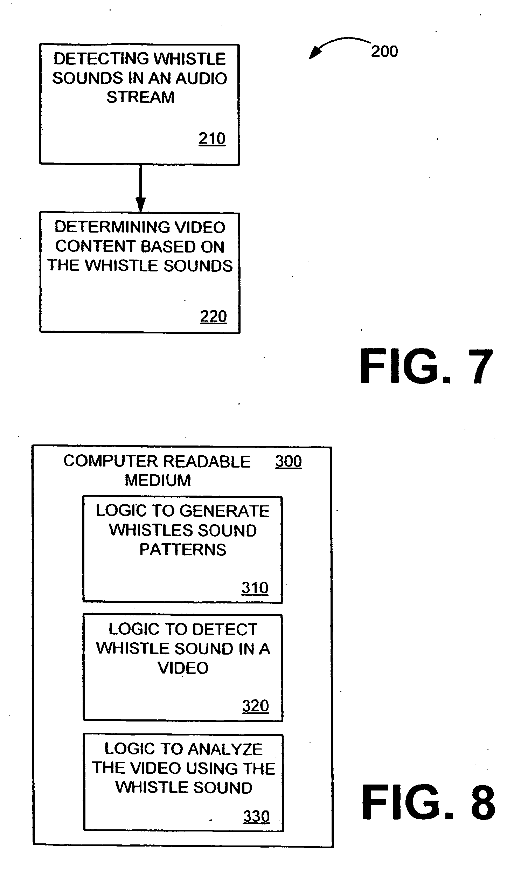

Reference is now made to FIG. 7, which is a block diagram illustrating an embodiment of a method for analyzing video. The method 200 begins with detecting whistle sounds in an audio stream in block 210. The whistle sounds can be detected using, for example, previously calculated features corresponding to sample whistle sounds. Examples of such features can include mel-frequency cepstrum coefficients, pitch, LPC coefficients, LSP coefficients, audio energy, zero-crossing rate, and noise frame ratios, among others. The audio stream can be processed into the same features and the features compared to those of the samples. The content of the video is determined based on the whistle sounds, using for example, multiple whistle sound characteristics. Examples of whistle sound characteristics include, but are not limited to, rhythms of whistle occurrences in a video, the type of whistle, and the quantity of whistle sounds in a video. For example, a high quantity of whistles that occur throughout the time of the event can occur in a football or a basketball game. Where the rhythms of whistle occurrences indicates that the game is continuously played without regular whistle interruption after individual plays, the video can be determined using the rhythms of whistle occurrences (e.g. to be a basketball game).

Reference is now made to FIG. 8, which is a block diagram illustrating an embodiment of a computer-readable medium having a program for analyzing video. The computer-readable medium 300 includes logic to generate whistle sound patterns from samples in block 310. The computer-readable medium 300 also includes logic to detect whistle sound in a video in block 320. The video can be a digital or analog streaming video signal or a video stored on a variety of storage media types. The whistle sound data is extracted from an audio stream of the video.

The computer-readable medium 300 further includes logic to analyze the video in block 330 using the whistle sounds. The analysis is performed by determining multiple whistle sound characteristics. For example, a whistle type might be distinctive among specific sporting events. Whistle type might be used to describe actual structural or functional differences in whistles or the style of using the whistle in the video. For example, some whistle types might be characterized by long duration whistle sounds. In contrast, other whistle types might be characterized by multiple short bursts or patterns of bursts.

Additionally, the whistle data can be further utilized to manipulate the video. In this manner, a user can experience improved playback quality by eliminating or bypassing undesirable segments of the video. Also, a cost reduction can be realized through reduced storage media requirements of the manipulated video. Further, the cost may be reduced through lower power consumption based on the reduced playback time of reviewing manipulated video.

Embodiments of the present disclosure can be implemented in hardware, software, firmware, or a combination thereof. Some embodiments can be implemented in software or firmware that is stored in a memory and that is executed by a suitable instruction execution system. If implemented in hardware, an alternative embodiment can be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), *etc.*

Any process descriptions or blocks in flow charts should be understood as representing modules, segments, or portions of code which include one or more executable instructions for implementing specific logical functions or steps in the process, and alternate implementations are included within the scope of an embodiment of the present disclosure in which functions may be executed out of order from that shown or discussed, including substantially concurrently or in reverse order, depending on the functionality involved, as would be understood by those reasonably skilled in the art of the present disclosure.

A program according to this disclosure that comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). In addition, the scope of the present disclosure includes embodying the functionality of the illustrated embodiments of the present disclosure in logic embodied in hardware or software-configured mediums.

It should be emphasized that the above-described embodiments of the present disclosure, particularly, any illustrated embodiments, are merely possible examples of implementations. Many variations and modifications may be made to the above-described embodiment(s) of the disclosure without departing substantially from the principles of the disclosure.

## Claims

1. A system (180) for analyzing video, comprising:
logic (182) configured to collect sample whistle sounds corresponding to a plurality of sport types;
logic (184) configured to determine a plurality of sample whistle features;
logic (186) configured to generate a plurality of whistle sound patterns;
logic (188) configured to extract a plurality of audio features corresponding to a plurality of frames in a video;
logic (190) configured to compare the plurality of sample whistle features with the plurality of audio features to determine a plurality of whistle sounds in the video;
logic (192) configured to determine a sport type using a type of whistle indicator;
logic (194) configured to determine a sport type using a quantity of whistle occurrences data value; and
logic (196) configured to determine a sport type (150) using a time of whistle occurrences data set.

2. The system (180) of claim 1, further comprising means for manipulating the video based on the content, the quantity of whistle occurrences data value and the time of whistle occurrences data set.

3. A method for analyzing video, comprising:
detecting a plurality of whistle sounds in an audio stream of a video; and
determining a video content based on a plurality of properties corresponding to the plurality of whistle sounds, **characterized in that** determining includes:
comparing (124) the plurality of whistle sound features with a plurality of whistle sound sample features, and
classifying a sport type (150) using a plurality of whistle sound characteristics.

4. The method of claim 3, further comprising generating a plurality of whistle sound patterns.

5. The method of claim 4, **characterized in that** the generating comprises collecting a plurality of whistle sound samples corresponding to a plurality of sports types (150) and/or
collecting the plurality of whistle sound samples for the plurality of sports types (150) and/or
determining a plurality of whistle sound sample features.

6. The method of claim 3, **characterized in that** the detecting comprises
extracting a plurality of whistle sounds from the video and/or
determining a plurality of whistle sound features.

7. The method of claim 6, **characterized in that** the plurality of whistle sound features are determined for each of a plurality of frames in the video.

8. The method of one of claims 3 to 7, further comprising manipulating the video based on the video content and a plurality of whistle sound characteristics.

9. The method of one of claims 3 to 8, **characterized in that** one of the plurality of whistle sound characteristics comprises
a quantity of occurrences in the video and/or
a plurality of rhythms of whistle occurrences in the video and/or
a whistle duration and/or
a whistle tonal frequency.

10. A computer readable medium (300) having a computer program for analyzing video, comprising:
executable instructions (310) configured to generate a plurality of whistle sound patterns;
executable instructions (320) configured to detect a whistle sound in a video; and
executable instructions (330) configured to analyze the video using the whistle sound, wherein the executable instructions (310, 320, 330) are configured to determine a sport type (150) using a plurality of whistle characteristics.

11. The computer readable medium (300) of claim 10, **characterized in that** the executable instructions to detect (320) are configured
to extract the whistle sound from the video and/or
to determine a plurality of whistle features.

12. The computer readable medium (300) of claim 11, **characterized in that** one of the plurality of features comprises a pitch for each of a plurality of frames.

13. The computer readable medium of one of claims 10 to 12, **characterized in that** one of the plurality of whistle characteristics comprises
a plurality of rhythms of whistle occurrences in the video and/or
a quantity of occurrences in the video.

14. The computer readable medium (300) of one of claims 10 to 13, further comprising executable instructions configured to manipulate the video using a characteristic of the whistle sound.

## Patentansprüche

1. System (180) zum Analysieren von Video, mit
Logik (182), die zum Sammeln von einer Mehrzahl von Sportarten entsprechenden Proben von Pfeifgeräuschen konfiguriert ist;
Logik (184), die zum Bestimmen einer Mehrzahl von Proben von Pfeifmerkmalen konfiguriert ist;
Logik (186), die zum Generieren einer Mehrzahl von Pfeifgeräuschmustern konfiguriert ist;
Logik (188), die zum Extrahieren einer Mehrzahl von Audiomerkmalen, die einer Mehrzahl von Frames in einem Video entsprechen, konfiguriert ist;
Logik (190), die zum Vergleichen der Mehrzahl von Proben von Pfeifmerkmalen mit der Mehrzahl von Audiomerkmalen konfiguriert ist, um eine Mehrzahl von Pfeifgeräuschen in dem Video zu bestimmen;
Logik (192), die zum Bestimmen einer Sportart unter Verwendung eines Pfeiftypindikators konfiguriert ist;
Logik (194), die zum Bestimmen einer Sportart unter Verwendung eines Datenwerts der Anzahl des Auftretens des Pfeifens konfiguriert ist; und
Logik (196), die zum Bestimmen einer Sportart (150) unter Verwendung eines Datensatzes der Zeit des Auftretens des Pfeifens konfiguriert ist.

2. System (180) nach Anspruch 1, weiterhin mit einem Mittel zum Manipulieren des Videos basierend auf dessen Inhalt, dem Datenwert der Anzahl des Auftretens des Pfeifens und dem Datensatz der Zeit des Auftretens des Pfeifens.

3. Verfahren zum Analysieren von Video, mit:
Detektieren einer Mehrzahl von Pfeifgeräuschen in einem Audio-Stream eines Videos; und
Bestimmen eines Inhalts des Videos basierend auf einer Mehrzahl von Eigenschaften, die der Mehrzahl von Pfeifgeräuschen entsprechen, **dadurch gekennzeichnet, dass** das Bestimmen Folgendes aufweist:
Vergleichen (124) der Mehrzahl von Pfeifgeräuschmerkmalen mit einer Mehrzahl von Proben von Pfeifgeräuschmerkmalen, und
Klassifizieren einer Sportart (150) unter Verwendung einer Mehrzahl von Pfeifgeräuscheigenschaften.

4. Verfahren nach Anspruch 3, weiterhin mit dem Generieren einer Mehrzahl von Pfeifgeräuschmustern.

5. Verfahren nach Anspruch 4, **dadurch gekennzeichnet, dass** das Generieren Folgendes aufweist:
Sammeln einer Mehrzahl von Proben von Pfeifgeräuschen, die einer Mehrzahl von Sportarten (150) entsprechen und/oder
Sammeln der Mehrzahl von Proben von Pfeifgeräuschen für die Mehrzahl von Sportarten (150) und/oder
Bestimmen einer Mehrzahl von Merkmalen der Proben von Pfeifgeräuschen.

6. Verfahren nach Anspruch 3, **dadurch gekennzeichnet, dass** das Detektieren Folgendes aufweist:
Extrahieren einer Mehrzahl von Pfeifgeräuschen aus dem Video und/oder
Bestimmen einer Mehrzahl von Pfeifgeräuschmerkmalen.

7. Verfahren nach Anspruch 6, **dadurch gekennzeichnet, dass** die Mehrzahl von Pfeifgeräuschmerkmalen für jeden Frame einer Mehrzahl von Frames in dem Video bestimmt wird.

8. Verfahren nach einem der Ansprüche 3 bis 7, weiterhin mit dem Manipulieren des Videos basierend auf dem Inhalt des Videos und einer Mehrzahl von Eigenschaften der Pfeifgeräusche.

9. Verfahren nach einem der Ansprüche 3 bis 8, **dadurch gekennzeichnet, dass** eine der Eigenschaften der Mehrzahl von Pfeifgeräuscheigenschaften Folgendes aufweist:
eine Anzahl des Auftretens in dem Video und/oder
eine Mehrzahl von Rhythmen des Auftretens des Pfeifens in dem Video und/oder
eine Dauer des Pfeifens und/oder
eine tonale Frequenz des Pfeifens.

10. Computerlesbares Medium (300) mit einem Computerprogramm zum Analysieren von Video, mit:
ausführbaren Befehlen (310), die zum Generieren einer Mehrzahl von Pfeifgeräuschmustern konfiguriert sind;
ausführbaren Befehlen (320), die zum Detektieren eines Pfeifgeräuschs in einem Video konfiguriert sind; und
ausführbaren Befehlen (330), die zum Analysieren des Videos unter Verwendung des Pfeifgeräuschs konfiguriert sind,
wobei die ausführbaren Befehle (310, 320, 330) zum Bestimmen einer Sportart (150) unter Verwendung einer Mehrzahl von Pfeifeigenschaften konfiguriert sind.

11. Computerlesbares Medium (300) nach Anspruch 10, **dadurch gekennzeichnet, dass** die ausführbaren Befehle zum Detektieren (320) für das Folgende konfiguriert sind:
Extrahieren des Pfeifgeräuschs aus dem Video und/oder
Bestimmen einer Mehrzahl von Pfeifmerkmalen.

12. Computerlesbares Medium (300) nach Anspruch 11, **dadurch gekennzeichnet, dass** eines der Mehrzahl von Merkmalen die Tonhöhe (englisch: "pitch") für jeden der Mehrzahl von Frames aufweist.

13. Computerlesbares Medium (300) nach einem der Ansprüche 10 bis 12, **dadurch gekennzeichnet, dass** eine der Mehrzahl von Pfeifeigenschaften Folgendes aufweist:
eine Mehrzahl von Rhythmen des Auftretens des Pfeifens in dem Video und/oder
eine Anzahl des Auftretens in dem Video.

14. Computerlesbares Medium (300) nach einem der Ansprüche 10 bis 13, weiterhin mit ausführbaren Befehlen, die zum Manipulieren des Videos unter Verwendung einer Eigenschaft des Pfeifgeräuschs konfiguriert sind.

## Revendications

1. Système (180) d'analyse vidéo, comprenant :
une logique (182) configurée pour collecter des sons de coup de sifflet d'échantillonnage correspondant à une pluralité de types de sport ;
une logique (184) configurée pour déterminer une pluralité de particularités de coup de sifflet d'échantillonnage ;
une logique (186) configurée pour générer une pluralité de motifs de sons de coup de sifflet ;
une logique (188) configurée pour extraire une pluralité de particularités audio correspondant à une pluralité de trames dans une vidéo ;
une logique (190) configurée pour comparer la pluralité de particularités de coup de sifflet d'échantillonnage à la pluralité de particularités audio pour déterminer une pluralité de sons de coup de sifflet dans la vidéo ;
une logique (192) configurée pour déterminer un type de sport utilisant un type d'indicateur de coup de sifflet ;
une logique (194) configurée pour déterminer un type de sport utilisant une valeur de données d'occurrences de quantité de coup de sifflet ; et
une logique (196) configurée pour déterminer un type de sport (150) utilisant un ensemble de données d'occurrences de temps de coup de sifflet.

2. Système (180) selon la revendication 1, comprenant en outre des moyens pour manipuler la vidéo sur la base du contenu, de la valeur de données d'occurrences de quantité de coup de sifflet et l'ensemble de données d'occurrences de temps de coup de sifflet.

3. Procédé d'analyse vidéo, comprenant les étapes consistant à :
détecter une pluralité de sons de coup de sifflet dans un flux audio d'une vidéo ; et
déterminer un contenu vidéo sur la base d'une pluralité de propriétés correspondant à la pluralité de sons de coup de sifflet, **caractérisé en ce que** la détermination comprend les étapes consistant à :
comparer (124) la pluralité de particularités de son de coup de sifflet à une pluralité d'échantillons de particularités de son de coup de sifflet, et
classifier un type de sport (150) en utilisant une pluralité de caractéristiques de son de coup de sifflet.

4. Procédé selon la revendication 3, comprenant en outre le fait de générer une pluralité de motifs de son de coup de sifflet.

5. Procédé selon la revendication 4, **caractérisé en ce que** la génération comprend les étapes consistant à :
collecter une pluralité d'échantillons de son de coup de sifflet correspondant à une pluralité de types de sport (150), et/ ou
collecter la pluralité d'échantillons de son de coup de sifflet pour la pluralité de types de sport (150), et/ou
déterminer une pluralité de particularités d'échantillons de son de coup de sifflet.

6. Procédé selon la revendication 3, **caractérisé en ce que** la détection comprend les étapes consistant à :
extraire une pluralité de sons de coup de sifflet de la vidéo, et/ou
déterminer une pluralité de particularités de son de coup de sifflet.

7. Procédé selon la revendication 6, **caractérisé en ce que** la pluralité de particularités de son de coup de sifflet est déterminée pour chacune d'une pluralité de trames dans la vidéo.

8. Procédé selon l'une quelconque des revendications 3 à 7, comprenant en outre la manipulation de la vidéo sur la base du contenu vidéo et d'une pluralité de caractéristiques de son de coup de sifflet.

9. Procédé selon l'une quelconque des revendications 3 à 8, **caractérisé en ce que** l'une de la pluralité de caractéristiques de son de coup de sifflet comprend
une quantité d'occurrences dans la vidéo, et/ou
une pluralité de rythmes d'occurrences de coup de sifflet dans la vidéo, et/ou
une durée de coup de sifflet, et/ ou
une fréquence tonale de coup de sifflet.

10. Support lisible par ordinateur (300) comportant un programme informatique pour une analyse vidéo, comprenant :
des instructions exécutables (310) configurées pour générer une pluralité de motifs de son de coup de sifflet ;
des instructions exécutables (320) configurées pour détecter un son de coup de sifflet dans une vidéo ; et
des instructions exécutables (330) configurées pour analyser la vidéo en utilisant le son de coup de sifflet, dans lequel les instructions exécutables (310, 320, 330) sont configurées pour déterminer un type de sport (150) en utilisant une pluralité de caractéristiques de coup de sifflet.

11. Support lisible par ordinateur (300) selon la revendication 10, **caractérisé en ce que** les instructions exécutables pour détecter (320 sont configurées
pour extraire le son de coup de sifflet de la vidéo et/ou
déterminer une pluralité de particularités de coup de sifflet.

12. Support lisible par ordinateur (300) selon la revendication 11, **caractérisé en ce que** l'une de la pluralité de particularités comprend une hauteur pour chacune d'une pluralité de trames.

13. Support lisible par ordinateur selon l'une quelconque des revendications 10 à 12, **caractérisé en ce que** l'une de la pluralité de caractéristiques de coup de sifflet comprend
une pluralité de rythmes d'occurrences de coup de sifflet dans la vidéo, et/ou
une quantité d'occurrences dans la vidéo.

14. Support lisible par ordinateur (300) selon l'une quelconque des revendications 10 à 13, comprenant en outre des instructions exécutables configurées pour manipuler la vidéo en utilisant une caractéristique du son de coup de sifflet.
